# EUROPÄISCHE PATENTSCHRIFT

(11) **EP 1 406 009 B1**
(45) Veröffentlichungstag und Bekanntmachung des Hinweises auf die Patenterteilung: **05.03.2008**
(21) Anmeldenummer: 02102409.6
(22) Anmeldetag: 02.10.2002
(51) Int. Cl.: F02N 11/08

(54) **Verfahren und Regelungssystem zur Anpassung der Leistungszufuhr zum Startermotor einer Brennkraftmaschine**
Method and control system for optimizing the power transferred to a starter of an internal combustion engine
Méthode et système de contrôle pour l'optimisation de la puissance transmise au démarreur d'un moteur à combustion interne

(43) Veröffentlichungstag der Anmeldung: 07.04.2004
(73) Patentinhaber: Ford Global Technologies, LLC, Dearborn, MI 48126 (US)
(72) Erfinder: Gaedt, Lutz Peter, 52499, Baesweiler (DE); Spijker, Engbert, 6361, BR Nuth (NL)
(74) Vertreter: Drömer, Hans-Carsten

(56) Entgegenhaltungen:
- EP-A- 1 077 149
- US-A- 5 200 877
- US-A- 5 349 931
- US-A1- 2002 082 765
- US-A1- 2002 124 825
- US-B1- 6 286 470

## Beschreibung

Die Erfindung betrifft ein Verfahren zur Anpassung der dem Startermotor einer Brennkraftmaschine zugeführten elektrischen Leistung sowie ein Regelungssystem, mit dem ein derartiges Verfahren durchgeführt werden kann.

Brennkraftmaschinen von Kraftfahrzeugen benötigen in der Regel für ihren Start einen elektrischen Hilfsmotor, welcher im Folgenden als "Startermotor" bezeichnet wird. Die dem Startermotor während des Anlassens der Brennkraftmaschine zugeführte elektrische Leistung wird üblicherweise möglichst groß gewählt, damit der Startvorgang kurz ist und die Brennkraftmaschine schnell ihre gewünschte Drehzahl erreicht.

Dies gilt insbesondere beim Einsatz sogenannter integrierter Starter-Generatoren, welche je nach Betriebsart sowohl als Startermotor als auch als Generator wirken können. Leistungsfähige Starter-Generatoren werden zunehmend für einen Stop-and-go-Betrieb eingesetzt, bei welchem die Brennkraftmaschine zur Einsparung von Kraftstoff und zur Minimierung von Abgasemissionen während des Haltens des Kraftfahrzeuges automatisch (ohne Betätigung des Zündschlüssels) abgestellt und vor dem Anfahren wieder gestartet wird. Um die Akzeptanz einer derartigen Betriebsart beim Kunden sicherzustellen, muß der Neustart der Brennkraftmaschine nach einem Halt möglichst schnell ablaufen, damit das Kraftfahrzeug verzögerungsfrei anfährt. Andererseits ist zu beachten, daß eine hohe Leistungsentnahme aus der Batterie eines Kraftfahrzeuges eine starke Belastung für die Batterie darstellt und bei Überschreiten gewisser Grenzwerte deren Lebensdauer erheblich mindern kann.

Aus der US 2002/0082765 A1 ist ein Verfahren zur Bestimmung der Startfähigkeit einer Starterbatterie bekannt. Von einer vorhandenen Startfähigkeit der Batterie wird dabei ausgegangen, wenn die Differenz zwischen der Leerlaufspannung der Batterie und der mittleren Spannungsabsenkung während des Startens oberhalb einer vorgegebenen minimalen Batteriespannung liegt. Wird eine fehlende Startfähigkeit der Batterie festgestellt, so werden beispielsweise für das Starten nicht erforderliche Verbraucher abgeschaltet oder die Starterbatterie wird aus einer anderen Batterie wieder aufgeladen.

Vor diesem Hintergrund war es Aufgabe der vorliegenden Erfindung, ein Verfahren und eine Vorrichtung bereitzustellen, welches bzw. welche bei Schonung der Energieversorgung einen optimierten Startvorgang der Brennkraftmaschine gewährieistet.

Diese Aufgabe wird durch ein Verfahren mit den Merkmalen des Anspruchs 1 sowie durch ein Regelungssystem mit den Merkmalen des Anspruchs 6 gelöst.

Vorteilhafte Ausgestaltungen sind in den Unteransprüchen enthalten.

Mit dem erfindungsgemäßen Verfahren wird die dem Startermotor einer Brennkraftmaschine zugeführte elektrische Leistung entsprechend den folgenden Schritten angepaßt
a) Für einen ersten Startvorgang wird mindestens eine charakteristische Größe des Startvorganges gemessen. Die Auswahl und Definition geeigneter charakteristischer Größen kann der Fachmann entsprechend den jeweiligen Optimierungszielen des Startvorganges vornehmen. Beispiele für charaktersche Größen werden unten im Rahmen spezieller Ausgestaltungen des Verfahrens erläutert.
b) Die Abweichung der (mindestens einen) charakteristischen Größe von einem zugehörigen Zielbereich wird ermittelt. Der Zielbereich ist eine Menge von Werten der charakteristischen Größe, die für einen Startvorgang als wünschenswert betrachtet werden. Er kann insbesondere ein einzelner Zielwert oder ein Intervall von Zielwerten sein.
c) Beim nächsten ähnlichen Startvorgang wird die dem Startermotor zugeführte elektrische Leistung so angepaßt, daß die Abweichung der charakteristischen Größe von ihrem Zielbereich im Vergleich zum Startvorgang von Schritt a) reduziert wird. "Ähnlich" sind zwei Startvorgänge dann, wenn die jeweils zugrunde liegenden Betriebsbedingungen gleich oder ähnlich sind, so daß für die charakteristische Größe derselbe Zielberelch wünschenswert ist.

Da sich viele Betriebsbedingungen wie zum Beispiel die Temperatur der Brennkraftmaschine nur langsam ändern, wird in der Regel der auf den ersten Startvorgang nächstfolgende Startvorgang in diesem Sinne "ähnlich" sein.

Dabei kann die Dauer eines Startvorganges eine dem Anpassungsverfahren zugrunde liegende charakteristische Größe bilden, wobei der zugehörige Zielbereich ein Intervall von Solldauem ist. Die Dauer eines Startvorganges wird üblicherweise definiert als der Zeitraum vom Beginn des Startens (Zufuhr elektrischer Leistung zum Startermotor und mechanische Kopplung des Startermotors mit der Brennkraftmaschine) bis zum Erreichen einer vorgegebenen Drehzahl der Brennkraftmaschine. Die Dauer des Startvorganges stellt insbesondere für Kraftfahrzeuge, die in einem Stop-and-go-Modus betrieben werden, eine wichtige Optimierungsgröße dar, da der Startvorgang für ein verzögerungsfreies Anfahren nach einem Halt des Kraftfahrzeuges möglichst kurz sein soll. Der Zielbereich für die Zeitdauer wird vorzugsweise durch einen einzelnen Zielwert beziehungsweise ein kleines Solldauer-Intervall um diesen Zielwert definiert, da "zu kurze" Startvorgänge für das Komfortgefühl keinen Gewinn bringen und nur die Stromversorgung unnötig belasten.

Ergänzund oder alternativ bildet die minimale Versorgungsspannung, die während eines Startvorganges am Startermotor angenommen wird, eine charakteristische Größe, wobei der zugehörige Zielbereich dieser charakteristischen Größe ein Spannungsintervall oberhalb eines Grenzwertes G ist (z.B. das Intervall [G, ∞[). Durch den hohen Leistungsbedarf eines Startermotors sinkt in der Regel die Versorgungsspannung während eines Startvorganges beträchtlich ab. Wenn die elektrische Energie aus einer Batterie (insbesondere einem Bleiakkumulator) zur Verfügung gestellt wird, kann das Unterschreiten gewisser Mindestwerte für die Versorgungsspannung deren Lebensdauer erheblich herabsetzen. Durch Vorgabe und Einhaltung des oben genannten Grenzwertes kann diesbezüglich sichergestellt werden, daß die Versorgungsspannung nicht unter schädigende Mindestwerte fällt.

Mit dem beschriebenen Verfahren ist es möglich, die bei einem Startvorgang eingesetzte elektrische Leistung im Laufe der Lebensdauer eines Kraftfahrzeuges ständig zu adaptieren, so daß ein durch die charakteristische Größe und ihren Zielbereich definiertes Optimierungskriterium immer eingehalten wird. Ein optimaler Startvorgang ist besonders von Vorteil, wenn das Kraftfahrzeug in einem Stop-and-go-Modus betrieben wird.

Bei einer Weiterbildung der Erfindung hängen die dem Startermotor zugeführte Leistung und/oder der Zielbereich der mindestens einen charakteristischen Größe von Betriebsparametern der Brennkraftmaschine und/oder von Betriebsparametern der Stromversorgung des Startermotors ab. Beispielsweise hängt die für das Anlassen einer Brennkraftmaschine benötigte Leistung in erheblichem Maße vom Zustand der Brennkraftmaschine und insbesondere davon ab, ob diese kalt oder bereits warmgelaufen ist. Ebenso variiert die Leistungsfähigkeit einer Batterie stark mit deren Temperatur. Es ist daher zweckmäßig, die dem Startermotor zugeführte elektrische Leistung sowie die Zielbereiche der charakteristischen Größen von solchen kritischen Betriebsparametern abhängen zu lassen, damit jeder Startvorgang entsprechend den herrschenden Randbedingungen optimal durchgeführt werden kann.

Gemäß einer anderen bevorzugten Ausgestaltung der Erfindung werden eine "primäre" und eine "sekundäre" charakteristische Größe gemessen, und es werden die Abweichungen der beiden Größen von ihren jeweiligen Zielbereichen mittelt. Weiterhin findet eine Anpassung der dem Startermotor zugeführten elektrischen Leistung in Abhängigkeit von der sekundären charakteristischen Größe nur dann statt, wenn die primäre charakteristische Größe nicht von ihrem (primären) Zielbereich abweicht. Bei dieser Vorgehensweise können somit zwei charakteristische Größen gleichzeitig in einem jeweiligen optimalen Zielbereich gehalten werden. Die Optimierung der primären charakteristischen Größe hat dabei jedoch eine höhere Priorität, da die sekundäre charakteristische Größe nur dann zu einer Anpassung der elektrischen Leistung führt, wenn die primäre Größe bereits in ihrem Zielbereich liegt. Durch die Vergabe der Prioritäten lassen sich widersprüchliche Forderungen hinsichtlich der Anpassung der elektrischen Leistung in Bezug auf zwei oder mehr charakteristische Größen lösen. Zum Beispiel kann die Versorgungsspannung einer Batterie die primäre und die Zeitdauer des Startvorganges die sekundäre charakteristische Größe bilden.

Für die Anpassung der dem Startermotor zugeführten elektrischen Leistung können verschiedene Vorschriften definiert werden. Im einfachsten Falle kann die Leistung um konstante Schritte erhöht oder verringert werden. Vorzugsweise wird die elektrische Leistung jedoch proportional zur Abweichung zwischen der charakteristischen Größe und deren Zielbereich angepaßt. D.h., daß eine kleine Abweichung nur zu einer geringen Veränderung der zugeführten elektrischen Leistung und eine große Abweichung zu einer entsprechend größeren Veränderung führt. Auf diese Weise wird einerseits bei großen Abweichungen eine schnelle Anpassung erreicht und andererseits bei kleinen Abweichungen der bestehende Zustand nur noch feinabgestimmt.

Die Erfindung betrifft ferner ein Regelungssystem für die dem Startermotor einer Brennkraftmaschine zugeführte elektrische Leistung, welches derart ausgebildet ist, daß es ein Verfahren der oben erläuterten Art ausführen kann. D.h., daß es dahingehend ausgebildet ist, mindestens eine charakteristische Größe für einen ersten Startvorgang zu messen, die Abweichung dieser Größe von einem zugehörigen Zielbereich zu ermitteln, und die beim nächsten ähnlichen Startvorgang dem Startermotor zugeführte Leistung so anzupassen, daß die Abweichung der charakteristischen Größe von ihrem Zielbereich reduziert wird. Mit einem derartigen Regelungssystem kann während der gesamten Lebensdauer eines Kraftfahrzeuges der Startvorgang so adaptiert werden, daß durch die charakteristischen Größen und deren Zielbereiche vorgegebene Optimierungskriterien erfüllt sind.

Gemäß einer bevorzugten Ausgestaltung weist das Regelungssystem Eingänge für Signale auf, welche die Drehzahl der Brennkraftmaschine, die Größe der Versorgungsspannung des Startermotors, die Temperatur der Brennkraftmaschine und/oder die Temperatur einer Batterie zur Stromversorgung anzeigen. Durch die Berücksichtigung der entsprechenden Signale ist es möglich, im Regelungssystem die Varianten des oben erläuterten Verfahrens zu implementieren. Insbesondere können als charakteristische Größen die Dauer des Startvorganges und/oder die minimale Versorgungsspannung während eines Startvorganges definiert werden, und die zugeführte elektrische Leistung sowie die Zielbereiche der charakteristischen Größe können von Betriebsparametern der Brennkraftmaschine beziehungsweise der Stromversorgung abhängig gemacht werden.

Der Startermotor, dessen zugeführte Leistung angepaßt wird, kann insbesondere ein integrierter Starter-Generator sein. Letzterer findet vor allem in Kraftfahrzeugen Verwendung, die in einem Stop-and-go-Modus betrieben werden.

Im Folgenden wird die Erfindung anhand der Figuren beispielhaft näher erläutert. Es zeigen:
- Fig. 1: schematisch die Komponenten des Antriebsstranges eines Kraftfahrzeuges mit einem erfindungsgemäßen Regelungssystem für den integrierten Starter-Generator, und
- Fig. 2: den zeitlichen Verlauf der Batteriespannung und der Drehzahl der Brennkraftmaschine während eines Startvorganges.

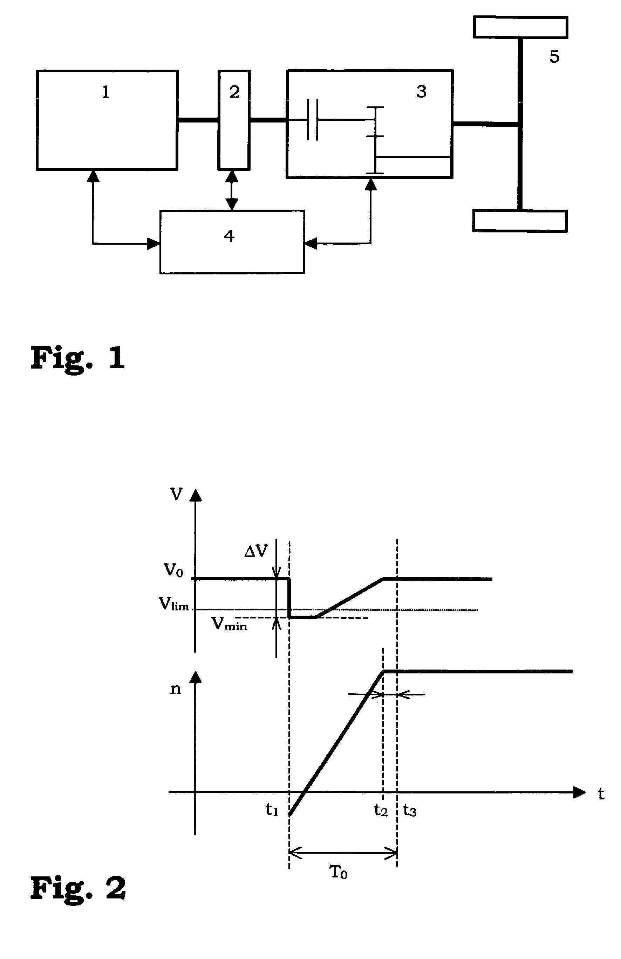

Der in Figur 1 dargestellte Antriebsstrang eines Kraftfahrzeuges besteht aus einer Brennkraftmaschine 1, an deren Ausgangswelle ein integrierter Starter-Generator 2 angekoppelt ist. Ein solcher Starter-Generator kann je nach Betriebsart sowohl als Elektromotor, der elektrische Energie in mechanische umwandelt, als auch als Generator, der umgekehrt mechanische Energie in elektrische umwandelt, betrieben werden. Der Starter-Generator 2 oder ein ähnlicher Anlasser könnte auch anders als dargestellt angeordnet und mit der Welle der Brennkraftmaschine verbunden werden. Insbesondere sind Anordnungen bekannt, bei denen der Anlasser am Kopf der Brennkraftmaschine angeordnet und über einen Keil- oder Zahnriemen mit deren Welle verbunden ist.

Die Drehung der Welle wird im Antriebsstrang weiterhin über eine mit 3 bezeichnete Einheit aus Kupplung und Getriebe auf die Räder 5 des Kraftfahrzeuges übertragen. Durch die Kupplung kann eine mechanische Trennung zwischen der Brennkraftmaschine 1 und den Rädern 5 bewirkt werden, während das Getriebe die Einstellung unterschiedlicher Übersetzungsverhältnisse erlaubt. Das Starten einer ausgeschalteten Brennkraftmaschine 1 durch den Starter-Generator 2 erfolgt, wenn die Kupplung geöffnet ist, so daß die Räder 5 abgekoppelt sind.

Die Steuerung des Startvorganges der Brennkraftmaschine 1 und insbesondere der Zufuhr elektrischer Leistung zum Starter-Generator 2 wird von einem Regelungssystem 4 vorgenommen. Dieses ist mit der Brennkraftmaschine 1, dem Starter-Generator 2 und der Getriebeeinheit 3 verbunden, um hiermit jeweils Signale (Kommandos und/oder Sensorsignale) auszutauschen.

Die Ablaufart des Startvorganges ist besonders wichtig, wenn die Brennkraftmaschine des Kraftfahrzeuges in einem Stop-and-go-Modus betrieben wird. In einem solchen Modus wird die Brennkraftmaschine zur Einsparung von Kraftstoff und zur Verminderung von Emissionen bei jedem Halt des Fahrzeuges, zum Beispiel vor einer Ampel, automatisch abgeschaltet, wobei nach einem Abschalten von typischerweise 20 Sekunden eine im Ergebnis positive Energiebilanz eintritt. Die Einstellungen für den anschließend notwendigen Neustart der Brennkraftmaschine hängen von vielen Parametern einschließlich der Leistungskraft des Startermotors sowie der Reibung und Kompression der Brennkraftmaschine 1 ab. Die Leistungskraft des Startermotors hängt wiederum wesentlich von der Spitzenleistungsfähigkeit der Batterie ab, welche je nach Alter und Batterietemperatur variieren kann. Die Reibung der Brennkraftmaschine hängt vor allem von deren Temperatur sowie von Herstellungstoleranzen ab. Die beschriebene gesamte Kette aus Batterie, Leistungselektronik, Anlasser und Brennkraftmaschine führt demnach zu einer hohen Variabilität von Fahrzeug zu Fahrzeug sowie während der Lebensdauer eines Fahrzeuges. Angesichts dieser Variabilität muß sichergestellt werden, daß der Neustart der Brennkraftmaschine schnell und zuverlässig erfolgt, damit der wünschenswerte Stop-and-go-Betrieb vom Benutzer akzeptiert wird.

Figur 2 zeigt diesbezüglich in einem Diagramm typische Zeitverläufe der Drehzahl n sowie der Batteriespannung V während eines Startvorganges. Der Startvorgang beginnt in einem Zeitpunkt t₁ mit der Zufuhr elektrischer Leistung zum Starter-Generator. Die Drehzahl n der Brennkraftmaschine erhöht sich daraufhin von Null kontinuierlich, bis sie zu einem Zeitpunkt t₂ einen vorgegebenen Schwellwert erreicht. Mit Erreichen dieses Schwellwertes zum Zeitpunkt t₂ gilt der Startvorgang als abgeschlossen, und die Leistungszufuhr zum Starter-Generator wird beendet.

Im oberen Teil von Figur 2 ist parallel der zugehörige Verlauf der Batteriespannung V während des Startvorganges dargestellt. Mit Beginn des Startens fällt die Batteriespannung auf einen minimalen Wert Vₘᵢₙ ab, auf dem sie eine Zeit lang verharrt, um anschließend kontinuierlich zu ihrem Ruhewert V₀ zurückzukehren.

Weiterhin ist in Figur 2 die optimale Zeitdauer T₀ für den Startvorgang eingetragen. Wenn der Startvorgang länger als T₀ dauert, wird der Benutzer dies als Verzögerung des Anfahrens wahrnehmen. Wenn dagegen wie im dargestellten Beispiel der Startvorgang kürzer als T₀ ist, wird hierfür ein unnötig großer Strom beziehungsweise eine hohe Leistung durch den Startermotor verbraucht, ohne daß hiermit für den Benutzer ein spürbarer Komfortgewinn verbunden ist. Es ist daher erstrebenswert, die Strom- bzw. Leistungszufuhr zum Starter-Generator 2 so einzustellen, daß die Dauer des Startvorganges t₂ - t₁ der Solldauer T₀ möglichst nahe kommt.

Andererseits kann die Anpassung des Stromes beziehungsweise der Leistung nur mit Blick auf die Dauer des Startvorganges zu sehr hohen Anlaßströmen führen. Dies ist z.B. bei einer hohen Reibung der Brennkraftmaschine bei geringen Temperaturen der Fall. Die hohen Ströme führen zu hohen Batteriebelastungen und dementsprechend zu einer verminderten Lebensdauer der Batterie. Ferner treten große Spannungssprünge im Stromversorgungsnetz insbesondere dann auf, wenn die Batterie gealtert ist oder eine geringe Temperatur aufweist.

Aus den genannten Gründen wird daher die Anpassung der Leistungszufuhr zum Starter-Generator 2 in Bezug auf die Zeitdauer des Startvorganges kombiniert mit einer Anpassung in Bezug auf den Spannungsabfall während des Anlassens. Wie in Figur 2 erkennbar ist, wird diesbezüglich eine minimale Versorgungsspannung Vₗᵢₘ definiert, unterhalb welche die Batteriespannung während des Startens nicht fallen soll. Typischerweise liegt die minimale Spannung Vₗᵢₘ ca. 20%-40%, vorzugsweise ca. 33% unterhalb der Normalspannung V₀ der Batterie. Bei einer 14 V Batterie wäre demnach typischerweise Vₗᵢₘ = 9.5 V. Wenn, wie in Figur 2 gezeigt, die minimale Batteriespannung während des Startens, Vₘᵢₙ, den vorgegebenen Grenzwert Vₗᵢₘ unterschreitet, wird die Leistungszufuhr für den nächsten ähnlichen Startvorgang um einen Betrag ΔL verringert.

Falls eine Situation eintritt, bei der die Batteriespannung während des Startvorganges oberhalb von Vₗᵢₘbleibt, die Dauer des Startens jedoch größer als T₀ ist, würde die Leistungszufuhr für den nächsten ähnlichen Startvorgang um einen Betrag ΔL erhöht.

Zusammengefaßt kann die skizzierte Anpassung der Leistungszufuhr wie folgt in einem Pseudo-Programmcode ausgedrückt werden:

| | | |
|---|---|---|
| FALLS (Vₘᵢₙ < Vₗᵢₘ) | DANN | L' = L - ΔL |
| SONST FALLS ((t₂-t₁) < T₀-δ) | DANN | L' = L - ΔL |
| SONST FALLS ((t₂-t₁) > T₀+δ) | DANN | L' = L + ΔL |
| SONST | | L' = L |

Hierin bedeutet L' die dem Startermotor 2 zugeführte elektrische Leistung beim nächsten Startvorgang, während L die beim aktuellen Startvorgang zugeführte elektrische Leistung ist. Der (kleine) Wert δ dient der Berücksichtigung von unvermeidlichen Toleranzen und führt effektiv dazu, daß ein Zeitintervall [T₀-δ, T₀+δ] als Zielbereich angesehen wird.

Bei obiger Vorschrift wird für den Startvorgang die Einhaltung der Batteriespannung V mit höherer Priorität beachtet als das Einhalten eines bestimmten Zeitfensters [T₀-δ, T₀+δ]. Die Schritte ΔL, um welche die zugeführte elektrische Leistung erhöht oder vermindert wird, können im einfachsten Fall konstant sein, sie können jedoch auch von bestimmten Randbedingungen wie insbesondere dem Ausmaß der Abweichungen (Vₘᵢₙ - Vₗᵢₘ) bzw. (T₀ - (t₂ - t₁)) abhängen.

## Patentansprüche

1. Verfahren zur Anpassung der dem Startermotor (2) einer Brennkraftmaschine (1) zugeführten elektrischen Leistung, bei dem
a) mindestens eine charakteristische Größe für einen ersten Startvorgang gemessen wird;
b) die Abweichung der charakteristischen Größe von einem Zielbereich ermittelt wird, und
c) die beim nächsten Startvorgang, der unter ähnlichen Betriebsbedingungen durchgeführt wird, dem Startermotor zugeführte Leistung derart angepasst wird, dass die Abweichung der charakteristischen Größe vom Zielbereich reduziert wird.
**dadurch gekennzeichnet, dass**
- die Dauer (t₂-t₁) eines Startvorganges eine charakteristische Größe bildet, und dass der zugehörige Zielbereich ein Solldauer-Intervall ist; und/oder
- dass die minimale Versorgungsspannung (Vmin) während eines Startvorganges eine charakteristische Größe bildet, und dass der zugehörige Zielbereich ein Spannungsintervall oberhalb eines Grenzwertes (Vlim) ist, wobei die Leistungszufuhr für den nächsten Startvorgang reduziert wird, wenn beim ersten Startvorgang die minimale Versorgungsspannung (Vmin) kleiner als der Grenzwert (Vlim) ist.

2. Verfahren nach Anspruch 1,
**dadurch gekennzeichnet, dass**
die dem Startermotor (2) zugeführte elektrische Leistung und/oder der Zielbereich der charakteristischen Größe von Betriebsparametern der Brennkraftmaschine (1) und/oder der Stromversorgung abhängt, insbesondere von den Temperaturen der Brennkraftmaschine oder einer Batterie.

3. Verfahren nach einem der Ansprüche 1 oder 2,
**dadurch gekennzeichnet, dass**
eine primäre und eine sekundäre charakteristische Größe und deren jeweiligen Abweichungen von ihren Zielbereichen gemessen beziehungsweise ermittelt werden, und dass eine Anpassung der dem Startermotor (2) zugeführten elektrischen Leistung in Abhängigkeit von der sekundären charakteristischen Größe nur dann erfolgt, wenn die primäre charakteristische Größe nicht von ihrem Zielbereich abweicht.

4. Verfahren nach einem der Ansprüche 1 bis 3,
**dadurch gekennzeichnet, dass**
die Anpassung der beim nächsten ähnlichen Startvorgang zugeführten elektrischen Leistung proportional zur Abweichung zwischen der charakteristischen Größe und ihrem Zielbereich erfolgt.

5. Verfahren nach einem der Ansprüche 1 bis 4,
**dadurch gekennzeichnet, dass**
die Brennkraftmaschine (1) in einem Stop-and-go-Modus betrieben wird.

6. Regelungssystem (4) für die dem Startermotor (2) einer Brennkraftmaschine (1) zugeführte elektrische Leistung,
**dadurch gekennzeichnet, dass**
dieses dahingehend ausgebildet ist, ein Verfahren nach einem der Ansprüche 1 bis 5 auszuführen.

7. Regelungssystem nach Anspruch 6,
**dadurch gekennzeichnet, dass**
dieses Eingänge für Signale aufweist, welche die Drehzahl (n) der Brennkraftmaschine (1), die Größe der Versorgungsspannung (V) des Startermotors (2), die Temperatur der Brennkraftmaschine und/oder die Temperatur einer Batterie zur Stromversorgung anzeigen.

8. Regelungssystem nach Anspruch 6 oder 7,
**dadurch gekennzeichnet, dass**
der Startermotor als integrierter Starter-Generator (2) ausgebildet ist.

## Claims

1. Method for matching the electrical power supplied to the starter motor (2) of an internal combustion engine (1), in which
a) at least one characteristic variable for a first starting operation is measured;
b) the deviation from the characteristic variable from a target range is determined, and
c) the power supplied to the starter motor during the next starting operation, which is performed under similar operating conditions, is matched in such a way that the deviation of the characteristic variable from the target range is reduced,
**characterized in that**
- the duration (t₂-t₁) of a starting operation forms a characteristic variable, and **in that** the associated target range is a desired duration interval; and/or
- **in that** the minimum supply voltage (Vmin) during a starting operation forms a characteristic variable, and **in that** the associated target range is a voltage interval above a limit value (Vlim), the power supply for the next starting operation being reduced if, during the first starting operation, the minimum supply voltage (Vmin) is smaller than the limit value (Vlim).

2. Method according to Claim 1,
**characterized in that** the electrical power supplied to the starter motor (2) and/or the target range of the characteristic variable depends on operational parameters of the internal combustion engine (1) and/or the current supply, in particular on the temperatures of the internal combustion engine or a battery.

3. Method according to either of Claims 1 and 2,
**characterized in that** a primary and a secondary characteristic variable and their respective deviations from their target ranges are measured or determined, and **in that** matching of the electrical power supplied to the starter motor (2) depending on the secondary characteristic variable only takes place when the primary characteristic variable does not deviate from its target range.

4. Method according to one of Claims 1 to 3,
**characterized in that** the matching of the electrical power supplied during the next similar starting operation takes place proportionally to the deviation between the characteristic variable and its target range.

5. Method according to one of Claims 1 to 4,
**characterized in that** the internal combustion engine (1) is operated in a stop-and-go mode.

6. Regulation system (4) for the electrical power supplied to the starter motor (2) of an internal combustion engine (1), **characterized in that** said system is designed to carry out a method according to one of Claims 1 to 5.

7. Regulation system according to Claim 6,
**characterized in that** it has inputs for signals, which indicate the rotation speed (n) of the internal combustion engine (1), the variable of the supply voltage (V) of the starter motor (2), the temperature of the internal combustion engine and/or the temperature of a battery for the current supply.

8. Regulation system according to Claim 6 or 7,
**characterized in that** the starter motor is in the form of an integrator starter generator (2).

## Revendications

1. Procédé pour adapter la puissance électrique acheminée au moteur de démarreur (2) d'un moteur à combustion interne (1), avec lequel
a) au moins une grandeur caractéristique est mesurée pendant une première opération de démarrage ;
b) l'écart entre le grandeur caractéristique et une plage visée est déterminé et
c) à la prochaine opération de démarrage, qui est accomplie sous des conditions opérationnelles similaires, la puissance acheminée au moteur de démarreur est adaptée de manière à réduire l'écart entre la grandeur caractéristique et la plage visée
**caractérisé en ce que**
- la durée (t₂-t₁) d'une opération de démarrage forme une grandeur caractéristique et que la plage visée associée est un intervalle de durée de consigne ; et/ou
- que la tension d'alimentation minimale (Vmin) pendant une opération de démarrage forme une grandeur caractéristique et que la plage visée associée est un intervalle de tension au-dessus d'une valeur limite (Vlim), la puissance acheminée pour la prochaine opération de démarrage étant réduite si, lors de la première opération de démarrage, la tension d'alimentation minimale (Vmin) est inférieure à la valeur limite (Vlim).

2. Procédé selon la revendication 1, **caractérisé en ce que** la puissance électrique acheminée au moteur de démarreur (2) et/ou la plage visée de la grandeur caractéristique dépend des paramètres de fonctionnement du moteur à combustion interne (1) et/ou de l'alimentation électrique, notamment des températures du moteur à combustion interne ou d'une batterie.

3. Procédé selon la revendication 1 ou 2,
**caractérisé en ce qu'**une grandeur caractéristique primaire et secondaire ainsi que leurs écarts respectifs par rapport à leurs plages visées sont mesurés ou déterminés et qu'une adaptation de la puissance électrique acheminée au moteur de démarreur (2) en fonction de la grandeur caractéristique secondaire n'est effectuée que si la grandeur caractéristique primaire ne s'écarte pas de sa plage visée.

4. Procédé selon l'une des revendications 1 à 3, **caractérisé en ce que** l'adaptation de la puissance électrique acheminée lors de la prochaine opération de démarrage similaire s'effectue de manière proportionnelle à l'écart entre les grandeurs caractéristiques et leur plage visée.

5. Procédé selon l'une des revendications 1 à 4, **caractérisé en ce que** le moteur à combustion interne (1) est utilisé dans un mode arrêt et départ.

6. Système de régulation (4) de la puissance électrique acheminée au moteur de démarreur (2) d'un moteur à combustion interne (1), **caractérisé en ce que** celui-ci est configuré en vue de mettre en oeuvre un procédé selon l'une des revendications 1 à 5.

7. Système de régulation selon la revendication 6, **caractérisé en ce que** celui-ci présente des entrées pour des signaux qui indiquent la vitesse de rotation (n) du moteur à combustion interne (1), l'amplitude de la tension d'alimentation (V) du moteur de démarreur (2), la température du moteur à combustion interne et/ou la température d'une batterie d'alimentation électrique.

8. Système de régulation selon la revendication 6 ou 7, **caractérisé en ce que** le moteur de démarreur est réalisé sous la forme d'un démarreur-alternateur intégré (2).
